# EUROPÄISCHE PATENTSCHRIFT

(11) **EP 2 411 110 B1**
(45) Veröffentlichungstag und Bekanntmachung des Hinweises auf die Patenterteilung: **06.05.2015**
(21) Anmeldenummer: 10709534.1
(22) Anmeldetag: 19.03.2010
(51) Int. Cl.: B01D 19/00, B01D 19/04, C07C 69/24, D21H 17/53, D21H 21/12, D21H 17/14

(54) **KOMPONENTE ZUR ENTLÜFTUNG EINES PROZESSWASSERS INSBESONDERE BEI DER PAPIERHERSTELLUNG**
COMPONENTS FOR AERATING PROCESSING WATER, IN PARTICULAR WHEN PRODUCING PAPER
COMPOSANT DESTINÉ À L'AÉRATION D'UNE EAU DE PROCESSUS NOTAMMENT DANS LA FABRICATION DE PAPIER

(30) Priorität: 26.03.2009 EP 09156270
(43) Veröffentlichungstag der Anmeldung: 01.02.2012
(73) Patentinhaber: Dr. W. Kolb AG, 8908 Hedingen (CH)
(72) Erfinder: NÄGELI, Ivo c/o ISLER & PEDRAZZINI AG, 8027 Zürich (CH); BLICKENSTORFER, Christoph, 8057 Zürich (CH); KELLENBERGER, Daniel, 8911 Rifferswil (CH); HÄUSLER, Christoph A., 6340 Baar (CH)
(74) Vertreter: Bremi, Tobias Hans
(86) Internationale Anmeldenummer: PCT/EP2010/053591
(87) Internationale Veröffentlichungsnummer: WO 2010/108858

(56) Entgegenhaltungen:
- EP-A- 0 531 713
- EP-A- 2 060 674
- DE-A1- 4 225 236
- DE-A1- 19 903 546

## Beschreibung

### TECHNISCHES GEBIET

Die vorliegende Erfindung betrifft eine Komponente zur Entlüftung eines Prozesswassers, Verwendungen einer solchen Komponente zur Entlüftung eines Prozesswassers sowie ein Verfahren zur Entlüftung eines Prozesswassers mit einer solchen Komponente.

### STAND DER TECHNIK

Bei großtechnischen Prozessen unter Einsatz von grenzflächenaktiven Substanzen, beispielsweise bei der Papierherstellung, stellt die Schaumentwicklung ein ernsthaftes Problem dar. Entsprechend werden den Prozesswässern spezifische Chemikalien beigemischt. Einerseits gibt es dabei so genannte Entschäumer, welche bereits entstandenen Schaum reduzieren respektive diesen so schnell wie möglich zusammenfallen lassen. Andererseits gibt es so genannte Entlüfter, welche nicht in erster Linie entstandenen Schaum abbauen sondern welche Luftblasen, die im Prozesswasser vorhanden sind, zusammen führen und nach oben aus dem Wasser austreten lassen unterstützen, ohne dass dabei Schaum entstehen kann. Entlüfter dienen also nicht nur dazu die Schaumbildung zu verhindern sondern generell dazu, den Luftgehalt im Prozesswasser zu reduzieren. Ein hoher Luftgehalt im Prozesswasser kann unabhängig von der Frage der damit gegebenenfalls verbundenen Schaumbildung negative Auswirkungen auf den Papierherstellungsprozess haben. So beispielsweise ein Anteil in einem Prozesswasser gravierende Probleme bei der Förderung (Pumpen) nach sich ziehen.

Aufgrund der an sich grundsätzlich unterschiedlichen Aufgabe der beiden Systeme Entschäumer respektive Entlüfter gibt es zwar Substanzen, welche beide Aufgaben übernehmen können, es gibt aber auch Substanzen, welche nur als Entschäumer wirken und andere welche nur als Entlüfter wirken. Je nach Aufgabe im Prozess kann es von Vorteil sein, Substanzen einzusetzen, welche nur als Entlüfter nicht aber als Entschäumer wirken und umgekehrt. Grund dafür ist die Tatsache, dass jede für den eigentlichen Herstellungsprozess (beispielsweise die Papierherstellung) nicht direkt in das Produkt ein fließend notwendig ist das Potenzial hat, in negative Wechselwirkung mit anderen in das Produkt einfließenden Komponenten zu treten. Zudem sind solche Zusatzstoffe auch hinsichtlich der ökologischen Wirkung in den Abwässern respektive hinsichtlich des Aufwands zur Entfernung solcher Zusatzstoffe aus den Abwässern nicht unproblematisch. Entsprechend besteht ein großes Bedürfnis nach spezifischen Systemen, welche ganz spezifische Aufgaben zu übernehmen in der Lage sind, und welche bereits in niedrigen Konzentrationen eine hohe Wirksamkeit zeigen.

Aus dem Gebiet der Entschäumer sei als technologischer Hintergrund für die vorliegende Erfindung auf folgende Dokumente hingewiesen:

Aus der WO 94/03251 aus dem Bereich der Reinigungstechnologie sind Entschäumer bekannt, welche auf endgruppenverschlossenen Fettalkoholpolyglykolethern beruhen. Als Fettalkohol-Bestandteil finden dabei Alkylketten mit wie angegeben 1-22 Kohlenstoffatomen, bevorzugt 2-18 Kohlenstoffatomen, besonders bevorzugt 8-18 Kohlenstoffatomen, Anwendung. In Bezug auf den Fettalkoholpolyglykolether offenbart das Dokument Ethylenoxid- (EO) und/oder Propylenoxid (PO) Systeme mit 1-40 Mol EO respektive PO, bevorzugt 2-10 Mol EO respektive PO. Solche Systeme werden endgruppenverschlossen mit Carbonsäuren, das heißt der oben angegebene Fettalkoholpolyglykolether mit diesen verestert. Als Carbonsäuren finden dabei gesättigte aliphatische Carbonsäuren mit 6-22 Kohlenstoffatomen, bevorzugt 8-18 Kohlenstoffatomen Anwendung. Im einzigen Ausführungsbeispiel gibt es nur ein einziges System, bei welchem ein Octansäure-octanol-4,5 EO-Ester eingesetzt wird. Als Anwendungsbereich für eine solche Komponente wird "Antischaum" angegeben, die spezifischen Anwendungsbereiche sind im Bereich der Reinigungstechnologie.

Ähnliche Systeme sind aus der EP 0324340 aus dem Bereich der Herstellung und/oder Verarbeitung von Nahrungsmitteln sowie im Zusammenhang mit Fermentationprozessen als Entschäumer offenbart worden. Dabei werden als Endgruppen kürzere Ketten eingesetzt als beim oben angegebenen Schutzrecht WO 94/03251.

Aus der WO 91/00763 sind als Entschäumer Fettalkohole bekannt, welche mit EO oder PO versetzt sind. Mit anderen Worten sind die in diesem Dokument angegebenen Systeme nicht endgruppenverschlossen. Als Anwendungsgebiet wird die Zugabe zu quellfähigen Polymeren angegeben, um Schaumbildung zu verhindern.

Aus der WO 92/11073 sind Kohlensäure-EO/PO-Ester beschrieben, dies im Zusammenhang der Schaumbekämpfung in der zuckerrübenverarbeitenden oder kartoffelverarbeitenden Nahrungsmittelindustrie oder bei Fermentationprozessen. Andere Anwendungen werden nicht angegeben.

### DARSTELLUNG DER ERFINDUNG

Aufgabe der vorliegenden Erfindung ist es unter anderem, ein verbessertes Verfahren zur Entlüftung eines industriellen Prozesswasser, wie beispielsweise eines Prozesswassers im Rahmen der Papierherstellung, das heisst in einer Papiermaschine aber z.B. auch in einem Zellstoffwerk, in einer Stoffaufbereitung, in einer Wasseraufbereitung, oder in einer Deinking-Anlage, zur Verfügung zu stellen. Das Verfahren soll dabei mit möglichst wenig wirksamer Komponente auskommen, um möglichst wenig Wechselwirkung mit anderen im System befindlichen Substanzen respektive Bestandteilen zu bewirken. Des weiteren soll das Verfahren eine möglichst schnelle Wirksamkeit entwickeln, das heißt insbesondere bei strömenden und schnell weiterverarbeitetem Prozesswasser soll sich die Wirksamkeit des Entlüfters möglichst kurz nach dessen Zugabe entfalten.

Entsprechend betrifft die vorliegende Erfindung konkret ein Verfahren zur Entlüftung eines Prozesswassers, welches dadurch gekennzeichnet, dass dem Prozesswasser eine wirksame Menge einer ganz speziellen Komponente zugegeben wird. Diese Komponente verfügt über folgende Struktur:

A-(XO)ₙ-B,

Es handelt sich bei der Komponente um das Anlagerungsprodukt von XO ausgewählt aus der Gruppe Ethylenoxid (EO) und/oder Propylenoxid (PO), mit n im Bereich von 1-10 an einen linearen gesättigten Alkylalkohol A ausgewählt aus der folgenden Gruppe: Stearylalkohol (18 Kohlenstoffatome), Arachidylalkohol (20 Kohlenstoffatome), Behenylalkohol (22 Kohlenstoffatome) oder einer Mischung dieser Alkohole, verestert mit einer linearen gesättigten Carbonsäure B ausgewählt aus der folgenden Gruppe: Stearinsäure (18 Kohlenstoffatome), Arachinsäure (20 Kohlenstoffatome), Behensäure (23 Kohlenstoffatome) oder einer Mischung aus diesen Carbonsäuren.

Typischerweise sind die Ausgangsmaterialien für A respektive für B entweder aus natürlichen Quellen oder aus synthetischen Quellen in einer Form vorliegend, dass ein Gemisch von verschiedenen Alkoholen (A) respektive Carbonsäuren (B) vorliegt. Wenn entsprechend in der Folge beispielsweise von einem System die Rede ist, bei welchem A von Stearylalkohol ausgeht und B von Behensäure, so schließt dies auch Mischungen ein, in welchen tatsächlich in der Hauptsache (typischerweise mehr als 50 %, bevorzugtermassen mehr als 80 %, insbesondere bevorzugt mehr als 90 %) Komponenten mit A ausgehend von Stearylalkohol und B ausgehend von Behensäure vorliegen in einem Gemisch mit anderen Komponenten bei welchen beispielsweise A auch Systeme mit 16 Kohlenstoffatomen und 20 Kohlenstoffatomen sowie teilweise ungesättigte und/oder verzweigte Systeme umfassen kann respektive B auch Systeme mit 20 Kohlenstoffatomen oder 24 Kohlenstoffatomen sowie teilweise ungesättigte und/oder verzweigte Systeme umfassen kann.

Insbesondere im Zusammenhang mit Stearylalkohol respektive Stearinsäure sei darauf hingewiesen, dass hier die technischen Produkte in der Mischung auch kürzere Kettenlängen aufweisen können. So ist beispielsweise der technische Stearylalkohol eine Mischung aus circa 30 % Palmitylalkohol (C16) und 70 % Stearylalkohol (C18). Auch eine Komponente, welche ausgehend von einem solchen technischen Stearylalkohol hergestellt ist, beinhaltet, und zwar in der Hauptsache, die Komponente A-(XO)ₙ-B wie oben definiert, es ist ja anspruchsgemäss nicht ausgeschlossen, dass das Mittel weitere Komponenten beispielsweise als Reaktionsprodukt des Palmitylalkohols, beinhaltet. Gemäß einer ersten bevorzugten Ausführungsform liegt n im Bereich von 2-6. Ganz besonders bevorzugt wird dabei, dass XO = EO und n=6. Ebenfalls möglich und bevorzugt ist ein System bei welchem XO = EO und n=3, dann vorzugsweise in Kombination mit A auf Basis von Stearylalkohol und B auf Basis von Behensäure.

Gemäß einer weiteren bevorzugten Ausführungsform ist die Anzahl Kohlenstoffatome der Gruppen A und B nicht gleich. Entsprechend kann beispielsweise A auf Basis von Stearylalkohol und B auf Basis von Arachinsäure oder Behensäure sein, es kann A auf Basis von Arachidylalkohol und B auf Basis von Stearinsäure oder Behensäure sein, oder es kann A auf Basis von Behenylalkohol sein und B auf Basis von Stearinsäure oder Arachinsäure. Alternativ kann es sich bei A um Behenylalkohol handeln und bei B um Behensäure.

Wie bereits oben erläutert handelt es sich vorzugsweise bei XO um Ethylenoxid (EO). Ebenfalls möglich sind aber Systeme auf Basis von PO und insbesondere auch gemischte Systeme aus EO und PO.

Bevorzugtermassen wird das Verfahren eingesetzt in einem System, wo es sich beim Prozesswasser um eine Suspension mit Fasern, insbesondere Zellulosefasern und/oder Baumwollfasern handelt und/oder mit Füllstoffpartikeln. Ein solches Prozesswasser kann gegebenenfalls zusätzlich versetzt sein mit Leimungsmittel und weiteren Zusatzstoffen. Vorzugsweise handelt es sich beim Prozesswasser um ein Prozesswasser im Rahmen der Papierherstellung so insbesondere vorzugsweise um das Prozesswasser in einer Papiermaschine oder eine entsprechende Vorstufe des Prozesswassers.

Eine weitere bevorzugte Ausführungsform ist dadurch gekennzeichnet, dass die Komponente dem Prozesswasser in Form einer Suspension oder Emulsion in Wasser mit einer mittleren Partikelgröße respektive Tröpfchengrösse (d50) der in der Suspension respektive Emulsion vorhandenen suspendierten respektive emulgierten Partikel respektive Tropfen aus der Komponente im Bereich von 0.1-80 µm zugegeben wird. Eine bevorzugte Ausführungsform ist dadurch gekennzeichnet, dass die mittlere Partikelgröße respektive Töpfchengröße im Bereich von 0.5-50 µm liegt, ganz besonders bevorzugt im Bereich von 1-10 µm, und speziell bevorzugt im Bereich von 2-5 µm. Grundsätzlich ist es möglich, eine solche Suspension in stabilisierter Form beispielsweise bei einer Papiermühle an zu liefern und dann als Suspension in Wasser dem Prozesswasser beizufügen. Es ist aber auch möglich, die Komponente, gegebenenfalls in Mischung mit Stabilisatoren oder Mitteln zur Erhöhung der Schmelztemperatur, als Flüssigkeit oder als Granulat an zu liefern und erst in der Papiermühle in einer Mischvorrichtung zu einer Emulsion respektive Suspension in Wasser herzurichten und dann dem Prozesswasser zuzugeben.

Bei einer solchen Suspension respektive Emulsion liegt die Komponente vorzugsweise in einem Gewichtsanteil im Bereich von 1-50 % vor, vorzugsweise im Bereich von 15-30 %. Es können gegebenenfalls zusätzliche Additive wie Verdicker, Konservierungsmittel, Stabilisatoren, Mittel zur Erhöhung der Schmelztemperatur der Komponente, nichtionische Tenside etc. enthalten sein, typischerweise aber in einem Anteil von nicht mehr als 10 Gewichtsprozent.

Des weiteren betrifft die vorliegende Erfindung einen Entlüfter respektive eine Entlüfterformulierung zur Entlüftung eines Prozesswassers. Ein solcher Entlüfter ist vorzugsweise dadurch gekennzeichnet, dass er eine wirksame Menge einer Komponente der oben beschriebenen Struktur A-(XO)ₙ-B beinhaltet.

Wie oben gilt auch hier, dass die Ausgangsmaterialien für A respektive für B entweder aus natürlichen Quellen oder aus synthetischen Quellen in einer Form vorliegen können, wobei ein Gemisch von verschiedenen Alkoholen (A) respektive Carbonsäuren (B) vorliegt. Insbesondere im Zusammenhang mit Stearylalkohol respektive Stearinsäure sei nochmals darauf hingewiesen, dass hier die technischen Produkte in der Mischung auch kürzere Kettenlängen aufweisen können. So ist beispielsweise der technische Stearylalkohol eine Mischung aus circa 30 % Palmitylalkohol (C16) und 70 % Stearylalkohol (C18). Auch eine Komponente eines solchen Entlüfters, welche ausgehend von einem solchen technischen Stearylalkohol hergestellt ist, beinhaltet, und zwar in der Hauptsache, die Komponente A-(XO)ₙ-B wie oben definiert, es ist ja anspruchsgemäss nicht ausgeschlossen, dass das Mittel weitere Komponenten beispielsweise als Reaktionsprodukt des Palmitylalkohols, beinhaltet.

Bevorzugtermassen liegt dabei n im Bereich von 2-6 und entweder ist A auf Basis von Stearylalkohol und B auf Basis von Behensäure, oder es ist A auf Basis von Behenylalkohol und B auf Basis von Stearinsäure, oder es ist A auf Basis von Behenylalkohol und B auf Basis von Behensäure. Insbesondere mit diesen Systemen wird eine sehr hohe Wirksamkeit als Entlüfter gefunden.

Der Entlüfter kann dabei die Komponente in Form einer Suspension oder Emulsion in Wasser vorliegen respektive erzeugt werden, bevorzugtermassen mit einer mittleren Partikelgröße respektive Tröpfchengrösse (d50) der in der Suspension respektive Emulsion vorhandenen suspendierten respektive emulgierten Partikel respektive Tropfen aus der Komponente im Bereich von 0.1-80 µm. Bevorzugt wird dabei wie oben geschildert ebenfalls eine Teilchengröße respektive Partikelgröße im Bereich von 0.5-50 µm, ganz besonders bevorzugt im Bereich von 1-10 µm, und speziell bevorzugt im Bereich von 2-5 µm. Die Komponente liegt vorzugsweise in diesem Fall in einem Gewichtsanteil im Bereich von 5-50 % bei einem Wasseranteil von 50-90 % vor, ergänzt gegebenenfalls durch zusätzliche Additive wie Verdicker, Konservierungsmittel, Stabilisatoren, Mittel zur Erhöhung der Schmelztemperatur der Komponente, nichtionische Tenside etc. enthalten ist.

Grundsätzlich kann ein solcher Entlüfter als Flüssigkeit oder als Granulat im wesentlichen nur die Komponente enthalten, wobei zusätzlich Mittel zur Erhöhung der Schmelztemperatur der Komponente enthalten sein können. Insbesondere bei den eher niedrig schmelzenden Komponenten mit kürzeren Ketten kann die Zugabe von Mitteln zur Erhöhung der Schmelztemperatur (möglich sind beispielsweise Systeme wie Pentaeritritmonobehenat, Pentaeritritdibehenat, Pentaeritrittribehenat, Glycerinmonobehenat, Behenamid) bei Anwendung des Entlüfters in Prozesswasser mit einer Temperatur von mehr als 40 °C vorteilhaft sein. So beispielsweise wenn beim Prozesswasser mit einer Temperatur von 45 °C oder 50 °C gearbeitet wird und der Schmelzpunkt der Komponente bei dieser Temperatur oder nur unwesentlich darunter liegt. Ohne an eine theoretische Erklärung gebunden zu sein scheint es so, dass für die Wirksamkeit des Entlüfters vermieden werden sollte, dass dieser bei dem Prozessbedingungen vom festen Zustand (Suspension) in den flüssigen Zustand (Emulsion oder sogar Lösung bei der niedrigen Konzentration in Prozesswasser) übergeführt wird. Eine ganz spezielle effektive Ausführungsform dieses Entlüfters ist dadurch gekennzeichnet, dass n=6, A auf Basis von Stearylalkohol und B auf Basis von Behensäure ausgebildet ist.

Beim Additiv zur Erhöhung des Schmelzpunkt kann es sich generell um einen Ester oder ein Amid handeln oder ein Gemisch solcher Substanzen. Insbesondere kann es sich um eine oder mehrere Substanzen ausgewählt aus der folgenden Gruppe handeln: Polyolester von langkettigen Fettsäuren, wie z.B.
mono-, di-, tri-, tetra-Fettsäure-Pentaerythrit-ester,
mono-, di-, tri-Fettsäure-Glycerinester,
mono-, di-, tri-Fettsäure-Trimethylolpropan-ester,
mono-, di-, tri-, tetra-, penta-, hexa-Fettsäure-Sorbitol-ester, insbesondere Pentaerythritmonobehenat, Pentaerythritdibehenat, Pentaerythrittribehenat, Glycerinmonobehenat, oder aber auch Fettsäureamide wie z.B. Behenamid, Ethylendisterayldiamid.

Wie bereits oben erwähnt, kann der Schmelzpunkt der Komponente, in Abhängigkeit der im Prozesswasser herrschenden Temperatur, eine wichtige Kenngrößen sein. So ist für breite mögliche Temperaturen im Prozesswasser bevorzugt, wenn die Komponente einen Schmelzpunkt von mehr als 40 °C, vorzugsweise von mehr als 45 °C, insbesondere bevorzugt im Bereich von 45°C-65 °C aufweist. Wird beispielsweise im Prozesswasser mit einer Temperatur von 50 °C gearbeitet, so sollte entweder die Komponente einen Schmelzpunkt (DSC) von mehr als 50 °C oder sogar mehr als 55 °C aufweisen, oder aber es sollte der Komponente eine den Schmelzpunkt der Komponente erhöhende weitere Komponente beigemischt werden, so dass das Gemisch aus der Komponente und der weiteren Komponente einen Schmelzpunkt in diesem Bereich oder oberhalb aufweist. Zudem betrifft die vorliegende Erfindung eine Verwendung eines Entlüfter, wie er oben beschrieben worden ist, zur Entlüftung eines Prozesswassers in der Papierherstellung, insbesondere zur Entlüftung des Prozesswassers (beispielsweise Zuführung, Stoffauflauf, Siebwasser) in der Papierherstellung. Die Temperatur im Prozesswasser kann dabei im Bereich von 35°C - 65°C liegen, insbesondere bevorzugt im Bereich von 45°C-55°C. Grundsätzlich kann dabei der Entlüfter dem Prozesswasser in Form einer Suspension oder Emulsion in Wasser beigefügt werden, wobei diese Suspension oder Emulsion entweder beim Hersteller respektive Konfektionierer der Komponente hergestellt sein kann und die Suspension respektive Emulsion als solche angeliefert und in der Papiermaschine eingesetzt wird, es ist aber auch möglich, dass die Komponente als Granulat oder Flüssigkeit angeliefert wird und erst dort, das heißt kurz vor der Zugabe in das Prozesswasser beispielsweise eine Papiermaschine zu einer Suspension respektive Emulsion verarbeitet wird.

Typischerweise wird ein solcher Entlüfter vorzugsweise dem Prozesswasser in einer Menge zugegeben, dass sich eine Konzentration im Bereich von 40 ppm-200ppm ergibt (Trockengewicht des Entlüfters bezogen auf Wasser-Gewicht).

Der Entlüfter kann dabei übrigens aus vor Ort unter Zuhilfenahme wenigstens eines Mischelementes in Wasser emulgiert und der Prozessflüssigkeit innerhalb weniger als 24 h, bevorzugt weniger als 6 h, insbesondere bevorzugt weniger als 3 h, und wenn möglich sogar innerhalb von weniger als 30 Minuten nach dem Emulgierprozess zugegeben werden. Wesentlich ist dann, dass die Anlieferung des Mittels nicht als Dispersion respektive Suspension erfolgt sondern als entweder Feststoff (Pellets, Granulat etc.) oder in aufgeschmolzener Form (das heißt geheizter Transport vom Hersteller zum Endverbraucher, das heißt zum Papierhersteller, sowie geheizte Lagerung beim Endverbraucher, das heißt beim Papierhersteller). Der Entlüfter verfügt dabei vorzugsweise über einen Schmelzpunkt von wenigstens 40 °C. Es hat sich nämlich gezeigt, dass dann, wenn der Entlüfter mit einem solchen Schmelzpunkt (einfach ermittelbar mit Standard DSC-Methoden) eingesetzt werden, auch sogar wenn zwischen dem Emulsionsprozess und der eigentlichen Zuführung in das Prozesswasser mehr als 5 min verstreichen, eine genügende Wirkung erzielt werden kann.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: der Luftgehalt als Funktion der Zeit bei einer Temperatur im Testmedium von 40 °C für die verschiedenen gemessenen Komponenten;
- Fig. 2: der Luftgehalt als Funktion der Zeit bei einer Temperatur im Testmedium von 45 °C für die verschiedenen gemessenen Komponenten; und
- Fig. 3: der Luftgehalt als Funktion der Zeit bei einer Temperatur im Testmedium von 50 °C für die verschiedenen gemessenen Komponenten.

### BESCHREIBUNG BEVORZUGTER AUSFÜHRUNGSFORMEN

In der nun folgenden detaillierten Beschreibung soll gezeigt werden, dass die allgemein formulierten Systeme, wie sie oben beschrieben worden sind, tatsächlich im Vergleich zu Systemen nach dem Stand der Technik herausragend bessere Eigenschaften aufweisen.

Zu diesem Zweck wurden so genannte Dispersionsentlüfter hergestellt, es handelt sich dabei um stabilisierte Suspensionen in Wasser, welche über Wochen lagerfähig sind. Es wurden dabei unterschiedliche Systeme untersucht.

Namentlich einerseits die drei folgenden Systeme nach dem Stand der Technik, welche bereits bisher als Entlüfter Verwendung gefunden haben:

| | |
|---|---|
| Pa-V/18814/A: | Fettalkohol auf Basis eines Fettalkohol-Gemisches aus Fettalkoholen mit 20-24 Kohlenstoffatomen, zusätzlich Additive. |
| Pa-V/18814/B: | Fettalkohol auf Basis eines Fettalkohol-Gemisches aus Fettalkoholen mit 20-26 Kohlenstoffatomen, zusätzlich Additive. |

Des weiteren wurde eine Komponente genau entsprechend der weiter oben diskutierten WO 94/03251 in den Vergleich mit einbezogen, wobei darauf hinzuweisen ist, dass in der WO 94/03251 diese Komponente als Entschäumer und nicht als Entlüfter beschrieben wird und auch nicht im Zusammenhang mit einer Papiermaschine. Dieses System ist konkret folgendes:

| | |
|---|---|
| Pa-V/18814/E: | 2-Ethylhexl-5EO-2-Ethylhexanoat. |

Als Komponenten nach der vorliegenden Erfindung wurden folgende Systeme untersucht:

| | |
|---|---|
| Pa-V/18814/C: | Behenyl-6EO-Behenat |
| Pa-V/18814/D: | Stearyl-3EO-Behenat |
| Pa-V/18814/G: | Stearyl-6EO-Behenat |
| Pa-V/18814/H: | Stearyl-6EO-Stearat |

Als Nachweis, dass die Kettenlänge der Ethoxykette und der spezifische oben angegebene erfindungsgemäße Bereich für n tatsächlich technische Vorteile aufweist wurde zusätzlich folgendes System ausgemessen:

| | |
|---|---|
| Pa-V/18814/F: | Stearyl-10EO-Behenat. |

In den dann folgenden Tabellen sind die Schmelzpunkte dieser Komponenten, gemessen mit DSC sowie weitere Eigenschaften zusammengefasst:

| Produktenamen | Schmelzpunkt DSC [°C] der Komponenten | |
|---|---|---|
| | Peak 1. Aufheizen | Peak 2. Aufheizen |
| Stearyl-3EO-Behenat | 47.17/52.91 | 44.05 / 51.53 |
| Stearyl-6EO-Behenat | 46.17 | 43.35 / 49.05 |
| Stearyl-10EO-Behenat | 44.58 | 42.32 |
| Behenyl-6EO-Behenat | 25.25 /57.00 | 23.86 / 54.45 |
| Stearyl-6EO-Stearat | 36.5 | 33.83 |
| 2-Ethylhexyl-5EO-2-Ethylhexanoat | -1.19 | 2.21 |

| Mustername | pH | Trockensubstanz[%] | Schmelzpunkt DSC [°C] der Phase B | |
|---|---|---|---|---|
| | | | Peak 1. Aufheizen | Peak 2. Aufheizen |
| Pa-197 | 9.52 | 32.85 | 31.90/46.47 | 46.50 |
| Wirkkomponente aus Pa-V/18814/B | 11.72 | 31.79 | 39.56/55.92 | 38.69/55.37 |
| Behenyl-6EO-Behenat | 8.89 | 33.68 | 22.32/28.12/ 55.41 | 22.38/28.20/ 53.75 |
| Stearyl-3EO-Behenat | 8.82 | 31.73 | 47.60/51.24 | 43.85/51.41 |
| 2-Etylhexyl-5EO-2-Etylhexanoat | 6.25 | 31.41 | - | - |
| Stearyl-10EO-Behenat | 7.95 | 32.31 | 45.67 | 43.53 |
| Stearyl-6EO-Behenat | 8.02 | 32.88 | 45.66 | 43.79 / 45.96/ 49.81 |
| Stearyl-6EO-Stearat | 8.17 | 32.22 | 36.71 / 37.98 / 40.51 | 34.39/41.02 |

Aus diesen Komponenten wurden jeweils die oben angesprochenen Suspensionen in folgendem Verfahren hergestellt:

In einem ersten Schritt wurde die so genannte Phase A hergestellt, indem nacheinander folgende Komponenten bei Raumtemperatur zusammen gemischt wurden (jeweils Gewichtsprozente):
40-60 % Wasser, < 0.5 % Verdicker (Alginate, Polyacrylate, Polysaccharide), < 5 % nichtionische Tenside.

In einem separaten Schritt wurde die so genannte Phase B hergestellt, indem folgende Komponenten aufgeschmolzen und danach miteinander vermischt wurden:
15-30 % der Komponente; < 10 % (in gewissen Fällen kein solcher Zusatz) Mittel zur Erhöhung der Schmelztemperatur der Komponente (beispielsweise Pentaeritritmonobehenat, Pentaeritritdibehenat, Pentaeritrittribehenat, Glycerinmonobehenat, Behenamid).

Anschließend wurde Phase B unter Rühren zur Phase A gegeben und mechanisch dispergiert. Nach Abkühlen ergibt sich Phase C, wobei weitere 10-30 % Wasser hinzugefügt werden und gegebenenfalls < 0.5 % Konservierungsmittel.

Daraus ergab sich jeweils ein Dispersionsentlüfter mit einer Volumenverteilung 50 % der Teilchengrößenverteilung im Bereich von 1 µm-20 µm, einer Viskosität von < 400 mPas und einer Trockensubstanz im Bereich von 20 %-35 %.

Als Testaufbau wurde ein Prozesswasser einer Papiermaschine als Testmedium simuliert indem circa 98-99 % Wasser mit circa 1 % gemahlenem Altpapier (Zeitung, Zellulosefasern, Füllstoffe, Bindemittel) sowie mit circa 0.5 % weiteren Additiven (Stärke, Salzlösung, Retentionsmittel, Säure) gerührt und vermischt wurden. Diesem Testmedium wurde der Entlüfter in einer Menge beigegeben, dass eine Konzentration im Bereich von 125-500ppm resultierte. Als Funktion der Zeit wurde anschließend der Luftgehalt für die unterschiedlichen Komponenten ermittelt. Das Testmedium wurde dabei konkret in einen Behälter gefüllt und in einem Kreislauf gepumpt, bis ein konstanter Luftgehalt vorhanden war. Dann wurde der Entlüfter der angegebenen Menge dosiert und die Luftgehaltsveränderung pro Zeiteinheit beobachtet.

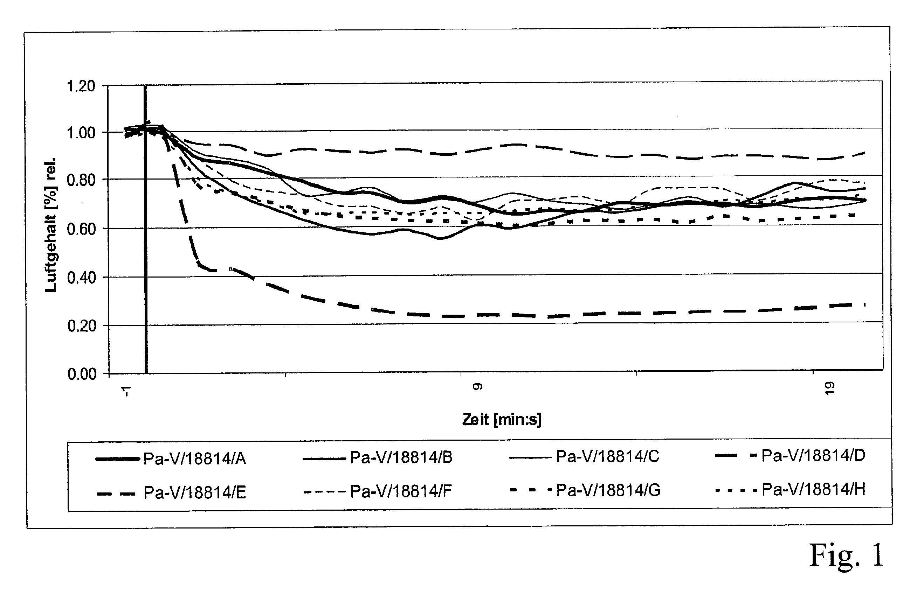

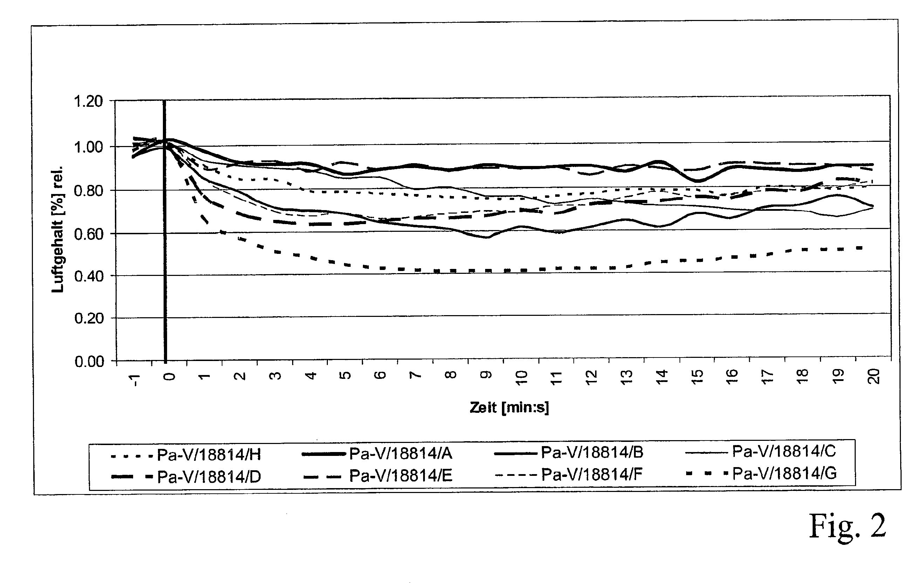

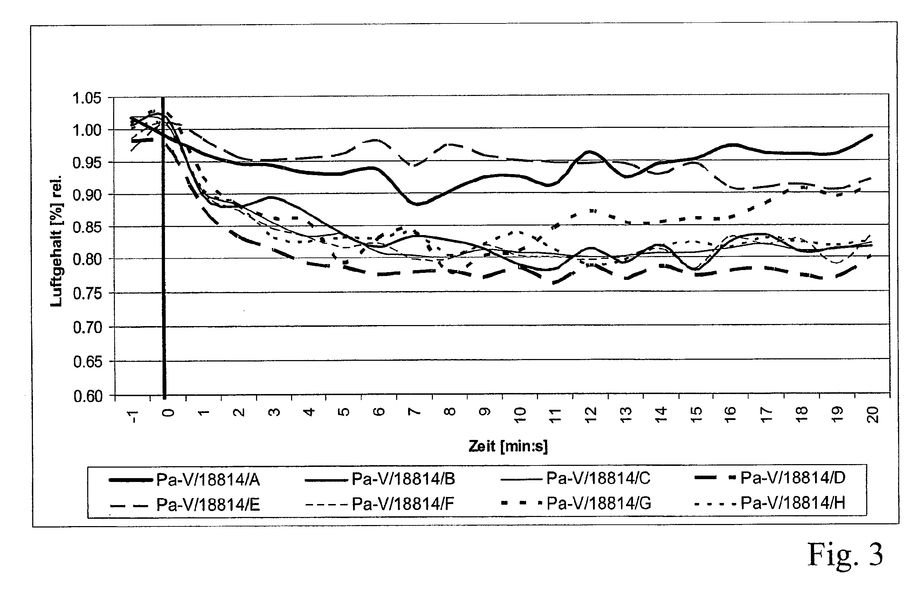

Die Resultate dieser Messungen für unterschiedliche Temperaturen im Testmedium (40 °C, Figur 1; 45 °C, Figur 2; 50 °C, Figur 3) ergeben zusammenfassend folgende Situation:

Bei einer Temperatur im Testmedium von 40 °C erweist sich das System Stearyl-3EO-Behenat als überragend. Ebenfalls sehr gute Eigenschaften zeigt Stearyl-6EO-Behenat, wobei hier sogar auf einer kurzen Zeitskala das beste Verhalten sichtbar ist.

Bei einer Temperatur im Testmedium von 45 °C zeigen die beiden Systeme Stearyl-3EO-Behenat und Stearyl-6EO-Behenat das beste Verhalten.

Bei einer Temperatur im Testmedium von 50 °C zeigt bei den hier durchgeführten Messungen der Fettalkohol mit 20-26 Kohlenstoffatomen das beste Verhalten. Das zweitbeste Verhalten zeigt Stearyl-3EO-Behenat. Hierzu muss präzisiert werden, dass auch hier die beiden Systeme Stearyl-3EO-Behenat und Stearyl-6EO-Behenat das beste Verhalten zeigen, wenn man ihnen ein Mittel zur Erhöhung der Schmelztemperatur in genügender Menge beigefügt, so dass die Schmelztemperatur ungefähr im Bereich von 55 °C liegt. Wird also sichergestellt, dass die Schmelztemperatur der Komponente wenigstens so hoch ist wie die Temperatur im Prozesswasser, so zeigen auch hier die erfindungsgemäßen Systeme das beste Verhalten.

## Patentansprüche

1. Verfahren zur Entlüftung eines Prozesswassers, **dadurch gekennzeichnet, dass** dem Prozesswasser eine wirksame Menge einer Komponente mit folgender Struktur zugegeben wird:
A-(XO)ₙ-B,
wobei diese Komponente das Anlagerungsprodukt von XO ausgewählt aus der Gruppe Ethylenoxid (EO) und/oder Propylenoxid (PO), mit n im Bereich von 1-10, an einen linearen gesättigten Alkylalkohol A ausgewählt aus der folgenden Gruppe ist: Stearylalkohol, Arachidylalkohol, Behenylalkohol oder einer Mischung dieser Alkohole, verestert mit einer linearen gesättigten Carbonsäure B ausgewählt aus der folgenden Gruppe: Stearinsäure, Arachinsäure, Behensäure oder einer Mischung aus diesen Carbonsäuren.

2. Verfahren nach Anspruch 1, **dadurch gekennzeichnet, dass** n im Bereich von 2-6 liegt, wobei vorzugsweise n = 3.

3. Verfahren nach einem der vorhergehenden Ansprüche, **dadurch gekennzeichnet, dass** die Anzahl Kohlenstoffatome der Gruppen A und B nicht gleich ist oder dass es sich bei A um Behenylalkohol handelt und bei B um Behensäure.

4. Verfahren nach einem der vorhergehenden Ansprüche, **dadurch gekennzeichnet, dass** es sich bei XO um Ethylenoxid (EO) handelt.

5. Verfahren nach einem der vorhergehenden Ansprüche, **dadurch gekennzeichnet, dass** es sich beim Prozesswasser um eine Suspension mit Fasern, insbesondere Zellulosefasern und/oder Baumwollfasern handelt und/oder mit Füllstoffpartikeln und/oder Füllstoffpartikeln, gegebenenfalls zusätzlich versetzt mit Leimungsmittel und weiteren Zusatzstoffen, wobei es sich vorzugsweise beim Prozesswasser um den Prozesswasser in einer Papiermaschine handelt.

6. Verfahren nach einem der vorhergehenden Ansprüche, **dadurch gekennzeichnet, dass** die Komponente dem Prozesswasser in Form einer Suspension oder Emulsion in Wasser mit einer mittleren Partikelgröße respektive Tröpfchengrösse (d50) der in der Suspension respektive Emulsion vorhandenen suspendierten respektive emulgierten Partikel respektive Tropfen aus der Komponente im Bereich von 0.1-80 µm zugegeben wird, bevorzugt im Bereich von 0.5-50 µm, ganz besonders bevorzugt im Bereich von 1-10 µm, und speziell bevorzugt im Bereich von 2-5 µm.

7. Verfahren nach Anspruch 6, **dadurch gekennzeichnet, dass** die Suspension respektive Emulsion die Komponente in einem Gewichtsanteil im Bereich von 1-50 % enthält, vorzugsweise im Bereich von 15-35 %, und dass gegebenenfalls zusätzliche Additive wie Verdicker, Konservierungsmittel, Stabilisatoren, Mittel zur Erhöhung der Schmelztemperatur der Komponente, nichtionische Tenside enthalten sind.

8. Entlüfter zur Entlüftung eines Prozesswassers **dadurch gekennzeichnet, dass** er eine wirksame Menge einer Komponente mit folgender Struktur beinhaltet:
A-(XO)ₙ-B,
wobei diese Komponente das Anlagerungsprodukt von XO ausgewählt aus der Gruppe Ethylenoxid (EO) und/oder Propylenoxid (PO), mit n im Bereich von 1-10 an einen linearen gesättigten Alkylalkohol A ausgewählt aus der folgenden Gruppe ist: Stearylalkohol, Arachidylalkohol, Behenylalkohol oder einer Mischung dieser Alkohole, verestert mit einer linearen gesättigten Carbonsäure B ausgewählt aus der folgenden Gruppe: Stearinsäure, Arachinsäure, Behensäure oder einer Mischung aus diesem Carbonsäuren.

9. Entlüfter nach Anspruch 8, **dadurch gekennzeichnet, dass** n im Bereich von 2-6 liegt und dass entweder A Stearylalkohol und B Behensäure ist, oder dass A Behenylalkohol und B Stearinsäure ist, oder dass A Behenylalkohol und B Behensäure ist.

10. Entlüfter nach einem der Ansprüche 8 oder 9, **dadurch gekennzeichnet, dass** er die Komponente in Form einer Suspension oder Emulsion in Wasser mit einer mittleren Partikelgröße respektive Tröpfchengrösse (d50) der in der Suspension respektive Emulsion vorhandenen suspendierten respektive emulgierten Partikel respektive Tropfen aus der Komponente im Bereich von 0.1-80 µm, bevorzugt im Bereich von 0.5-50 µm, ganz besonders bevorzugt im Bereich von 1-10 µm, und speziell bevorzugt im Bereich von 2-5 µm enthält wobei die Komponente in einem Gewichtsanteil im Bereich von 1-50 % bei einem Wasseranteil von 50-90 %, ergänzt gegebenenfalls durch zusätzliche Additive wie Verdicker, Konservierungsmittel, Stabilisatoren, Mittel zur Erhöhung der Schmelztemperatur der Komponente, nichtionische Tenside enthalten ist.

11. Entlüfter nach einem der Ansprüche 8-10, **dadurch gekennzeichnet, dass** er als Flüssigkeit oder als Granulat im wesentlichen nur die Komponente enthält, wobei zusätzlich Mittel zur Erhöhung der Schmelztemperatur der Komponente enthalten sein können.

12. Entlüfter nach einem der Ansprüche 8-11, **dadurch gekennzeichnet, dass** n = 6, A Stearylalkohol und B Behensäure ist.

13. Entlüfter nach einem der Ansprüche 8-12, **dadurch gekennzeichnet, dass** die Komponente einen Schmelzpunkt von mehr als 40 °C, vorzugsweise von mehr als 45°C, insbesondere bevorzugt im Bereich von 45°C-65 °C aufweist.

14. Verwendung eines Entlüfters nach einem der Ansprüche 8-13 zur Entlüftung eines Prozesswassers in der Papierherstellung, insbesondere zur Entlüftung des Prozesswassers in der Papierherstellung, wobei die Temperatur im Prozesswasser bevorzugtermassen im Bereich von 35°C - 65°C liegt, insbesondere bevorzugt im Bereich von 45°C-55°C.

15. Verwendung nach Anspruch 14, **dadurch gekennzeichnet, dass** der Entlüfter dem Prozesswasser in Form einer Suspension oder Emulsion in Wasser beigefügt wird.

## Claims

1. Process for deaerating a process water, **characterized in that**, an effective amount of a component having the following structure is added to the process water:
A-(XO)ₙ-B,
whereby said component is the addition product of XO chosen from the group of ethylene oxide (EO) and/or propylene oxide (PO), with n in the range of 1-10, and a linear saturated alkyl alcohol A is chosen from the following group: stearyl alcohol, arachidyl alcohol, behenyl alcohol or a mixture of these alcohols, esterified with a linear saturated carboxylic acid B chosen from the following group: stearic acid, arachidic acid, behenic acid or a mixture of these carboxylic acid.

2. Process according to claim 1, **characterized in that** n is in the range of 2-6, whereby preferably n = 3.

3. Process according to one of the preceding claims, **characterized in that** the number of carbon atoms of the groups A and B is not identical or that A is behenyl alcohol and B is behenic acid.

4. Process according to one of the preceding claims, **characterized in that**, XO is ethylene oxide (EO).

5. Process according to one of the preceding claims, **characterized in that** the process water is a suspension with fibers, in particular cellulose fibers and/or cotton fibers and/or with filler particles and/or filler particles, eventually additionally containing a sizing agent and further additives, whereby preferably the process water is a process water in a paper machine.

6. Process according to one of the preceding claims,
**characterized in that**,
the component is added to the process water in the form of a suspension or an emulsion in water having an average particle diameter respectively a droplet diameter (d50) of the suspended respectively emulsified particles respectively drops of component present in the suspension respectively emulsion in the range of 0.1-80 um, preferably in the range of 0.5-50 um, more specially preferably in the range of 1-10 um, and specially preferably in the range of 2-5 um.

7. Process according to claim 6, **characterized in that** the suspension respectively emulsion the component is comprised in a weight proportion in the range of 1-50 %, preferably in the range of 15-35 %, and that eventually additionally additives such as thickeners, conserving agents, stabilizers, agents for increasing the melting temperature of the component, non-ionic surfactants are comprised.

8. Deaerator for deaerating a process water **characterized in that** it comprises an effective amount of a component having the following structure:
A-(XO)ₙ-B,
whereby said component is the addition product of XO chosen from the group of ethylene oxide (EO) and/or propylene oxide (PO), with n in the range of 1-10, and a linear saturated alkyl alcohol A is chosen from the following group: stearyl alcohol, arachidyl alcohol, behenyl alcohol or a mixture of these alcohols, esterified with a linear saturated carboxylic acid B chosen from the following group: stearic acid, arachidic acid, behenic acid or a mixture of these carboxylic acids.

9. Deaerator according to claim 8, **characterized in that**, n is in the range of 2-6 and that either A is stearyl alcohol and B is behenic acid, or that A is behenyl alcohol and B is stearic acid, or that A is behenyl alcohol and B is behenic acid.

10. Deaerator according to one of claims 8 or 9, **characterized in that** it comprises the component in the form of a suspension or emulsion in water having an average particle diameter respectively droplet diameter (d50) of the suspended respectively emulsified particles respectively drops of component present in the suspension respectively emulsion in the range of 0.1-80 um, preferably in the range of 0.5-50 um, very particularly preferably in the range of 1-10 um, and specially preferably in the range of 2-5 um whereby the component is comprised in a weight proportion in the range of 1-50 % at a water content of 50-90 %, eventually additionally complemented by additives such as thickeners, conserving agents, stabilizers, agents for increasing the melting temperature of the component, non-ionic surfactants.

11. Deaerator according to one of claims 8-10, **characterized in that** as a liquid or as a granulate, it essentially comprises only the component, whereby additionally agents for increasing the melting temperature of the component can be included.

12. Deaerator according to one of claims 8-11, **characterized in that** n = 6, A is stearyl alcohol and B is behenic acid.

13. Deaerator according to one of claims 8-12, **characterized in that** the component exhibits a melting point of more than 40 °C, preferably of more than 45°C, in particular preferably in the range of 45°C-65 °C.

14. Use of a deaerator according to one of claims 8-13 for deaerating a process water in the production of paper, in particular for deaerating the process water in the production of paper, whereby the temperature in the process liquid preferably lies in the range of 35°C - 65°C, in particular preferably in the range of 45°C-55°C.

15. Use according to claim 14, **characterized in that** the deaerator is added to the process water in the form of a suspension or an emulsion in water.

## Revendications

1. Procédé pour désaérer une eau de processus, **caractérisé en ce que** une quantité effective d'une composante ayant la structure suivante est ajoutée à l'eau de processus:
A-(XO)ₙ-B,
où cette composante est le produit d'addition de XO choisi dans le groupe de: oxyde d'éthylène (EO) et/ou oxyde de propylène (PO), avec n dans le domaine de 1-10, et un alcool d'alkyle linéaire saturé A étant choisi dans le groupe suivant: alcool stéarylique, alcool arachidylique, alcool béhénylique ou un mélange de ces alcools, estérifiés avec un acide carboxylique linéaire saturé B choisi dans le groupe suivant: acide stéarique, acide arachidique, acide béhénique ou un mélange de ces acides carboxyliques.

2. Procédé selon la revendication 1, **caractérisé en ce que** n est situé dans le domaine de 2-6, où préférablement n = 3.

3. Procédé selon une des revendications précédentes, **caractérisé en ce que** le nombre d'atomes de carbone des groupes A et B n'est pas identique ou que i s'agit de alcool béhénylique dans le cas de A et d'acide béhénique dans le cas de B.

4. Procédé selon une des revendications précédentes, **caractérisé en ce que** dans le cas de XO, il s'agit d'oxyde d'éthylène (EO).

5. Procédé selon une des revendication précédentes, **caractérisé en ce que** dans le cas de l'eau de processus, il s'agit d'une suspension avec fibres, particulièrement avec fibres de cellulose et/ou fibres de coton et/ou avec particules de matériel de charge et/ou de particules de matériel de charge, éventuellement d'avantage mélangé à un matériel de collage et d'avantage d'additifs, où dans le cas de l'eau de processus il s'agit préférablement d'eau de processus dans une machine à papier.

6. Procédé selon une des revendications précédentes,
**caractérisé en ce que**,
la composante de l'eau de processus est ajoutée sous forme d'une suspension ou émulsion dans l'eau ayant un diamètre de particule moyen respectivement diamètre de gouttelette (d50) des particules respectivement gouttes de composante suspendues respectivement émulsifiées présentes dans la suspension respectivement émulsion, dans le domaine de 0.1-80 um, préférablement dans le domaine de 0.5-50 um, très spécialement préférablement dans le domaine de 1-10 um, et spécialement préférablement dans le domaine de 2-5 um.

7. Procédé selon la revendication 6, **caractérisé en ce que** la suspension respectivement émulsion contient la composante dans un pourcentage de poids dans le domaine de 1-50 %, préférablement dans le domaine de 15-35 %, et que éventuellement d'avantage d'additifs comme des épaississant, conservateurs, stabilisants, agents pour augmenter la température de fusion de la composante, agents tensioactifs non-ioniques sont contenus.

8. Désaérant pour désaérer une eau de processus **caractérisé en ce qu'**il contient une quantité effective d'une composante ayant la structure suivante:
A-(XO)ₙ-B,
où cette composante est5 le produit d'addition de XO choisi dans le groupe de oxyde d'éthylène (EO) et/ou oxyde de propylène (PO), avec n dans le domaine de 1-10 et un alcool d'alkyle A linéaire saturé étant choisi dans le groupe suivant: alcool stéarylique, alcool arachidylique, alcool béhénylique ou un mélange de ces alcools, estérifiés avec un acide carboxylique B linéaire saturé choisi dans le groupe suivant: acide stéarique, acide arachidique, acide béhénique ou un mélange de ces acides carboxyliques.

9. Désaérant selon la revendication 8, **caractérisé en ce que** n se situe dans le domaine de 2-6 et que ou bien A est l'alcool- stéarylique et B est l'acide béhénique, ou que A est l'alcool béhénylique et B est l'acide stéarique, ou que A est l'alcool béhénylique et B est l'acide béhénique.

10. Désaérant selon une des revendications 8 ou 9, **caractérisé en ce que** il contient la composante sous forme de suspension ou émulsion dans l'eau de particules respectivement gouttes de composante présentes dans la suspension respectivement émulsion suspendues respectivement émulsifiées ayant un diamètre de particule moyen respectivement diamètre de gouttelettes (d50) dans le domaine de 0.1-80 um, préférablement dans le domaine de 0.5-50 um, très spécialement préférablement dans le domaine de 1-10 um, et spécialement préférablement dans le domaine de 2-5 um où la composante est contenue dans un pourcentage de poids dans le domaine de 1-50 % pour une proportion d'eau de 50-90 %, éventuellement complété d'avantage par des additifs comme des épaississants, conservateurs, stabilisants, agents pour augmenter la température de fusion de la composante, agents tensioactifs non-ioniques.

11. Désaérant selon une des revendications 8-10, **caractérisé en ce qu'**il contient la composante essentiellement uniquement en tant que liquide ou granulé, où des agents pour augmenter la température de fusion de la composante peuvent d'avantage être contenus.

12. Désaérant selon une des revendications 8-11, **caractérisé en ce que** n = 6, A est l'alcool stéarylique et B est l'acide béhénique.

13. Désaérant selon une des revendications 8-12, **caractérisé en ce que** la composante présente un point de fusion de plus de 40 °C, préférablement de plus de 45°C, particulièrement préférablement dans le domaine de 45°C-65 °C.

14. Utilisation d'un désaérant selon une des revendications 8-13 pour désaérer une eau de processus dans la production de papier, particulièrement pour désaérer de l'eau de processus dans la production de papier, où la température dans l'eau de processus se situe préférablement dans le domaine de 35°C - 65°C, particulièrement préférablement dans le domaine de 45°C-55°C.

15. Utilisation selon la revendication 14, **caractérisée en ce que** le désaérant est ajouté à l'eau de processus sous forme d'une suspension ou émulsion dans l'eau.
